# DEMANDE DE BREVET EUROPEEN

(11) **EP 3 623 751 A1**
(43) Date de publication de la demande: **18.03.2020**
(21) Numéro de dépôt: 19195927.9
(22) Date de dépôt: 06.09.2019
(51) Int. Cl.: G01B 21/16, G01B 3/22, G01B 5/00, G01B 5/14, G01B 7/00, G01B 7/14, G01B 11/14

(54) **DISPOSITIF DE DÉTECTION DE POSITION D'UN ÉLÉMENT MOBILE PAR RAPPORT À UN ÉLÉMENT DE RÉFÉRENCE**

(30) Priorité: 11.09.2018 FR 1858140
(71) Demandeur: Vossloh Cogifer (Société Anonyme), 92500 Rueil Malmaison (FR)
(72) Inventeur: BINDER, Jean-Louis, 67610 LA WANTZENAU (FR); SOLAGES, Aurélie, 67170 Geudertheim (FR)
(74) Mandataire: Cabinet Nuss

(57) **Abrégé**

La présente invention a pour objet un dispositif de détection de position d'un élément mobile (3b) par rapport à un élément de référence (3a), caractérisé en ce que le dispositif comprend :
- une structure fixe (1) destinée à être montée fixe avec un élément de référence (3a),
- une structure mobile (2) destinée à être associée avec un mécanisme de déplacement de l'élément mobile (3b) par rapport à l'élément de référence (3a), la structure mobile (2) étant monté fixe en rotation avec un arbre de pivotement (2bis),
- un moyen d'actionnement de la structure mobile (2) par rapport à la structure fixe (1),
- au moins un capteur (4a, 4b),
- au moins une came (5a, 5b) comprenant une surface (51) destinée à interagir avec au moins un capteur (4a, 4a), la came (5a, 5b) étant montée fixe en rotation avec un arbre de pivotement (5bis),
- au moins un mécanisme de démultiplication (6) de l'angle de pivotement de la came (5a, 5b) par rapport à l'angle de pivotement de l'arbre de pivotement (2bis) de la structure mobile (2).

## Description

La présente invention se rapporte au domaine des dispositifs de détection de la position d'un élément mobile par rapport à un élément de référence et plus particulièrement au domaine des dispositifs de détection de la position d'une élément mobile par rapport à un élément de référence dans des appareils de voie.

Dans le cadre de l'actionnement d'un appareil de voie, par exemple dans le cadre du déplacement d'une aiguille par rapport à son contre-aiguille, il est indispensable de pouvoir détecter les positionnements respectifs que sont, d'une part, l'aiguille en appui contre le contre-aiguille et, d'autre part, l'aiguille en écartement suffisant du contre-aiguille. Cette détection de position permet de confirmer le bon positionnement de l'aiguille par rapport au contre-aiguille pour autoriser le déplacement d'un matériel roulant sur une voie directe ou sur une voie déviée de l'aiguillage.

Certains mécanismes de détection de position connus et utilisés dans le contrôle de position d'éléments au niveau d'appareil de voie comprennent, d'une part, un carter monté fixe avec un élément de référence comme un contre-aiguille et, d'autre part, une bielle associée en déplacement avec un élément mobile comme une aiguille de sorte que le pivotement de la bielle par rapport au carter du contrôleur sous l'effet de l'actionnement de l'appareil de voie permet de déterminer la position de l'élément mobile par rapport à l'élément fixe de référence correspondant lorsqu'elle se trouve en situation approchée ou en situation écartée. Ces mécanismes de détection confirment alors la position d'un élément par rapport à un autre en générant un signal électrique par l'intermédiaire d'un ou de plusieurs capteurs. Mais ces mécanismes de détection peuvent présenter un fonctionnement comportant une hystérésis au niveau d'un de ses capteurs, ce qui entraine une altération de la précision du signal de détection généré.

C'est ainsi que dans le cadre notamment d'une mise en oeuvre dans l'industrie, les appareils d'actionnement de l'élément mobile par rapport à l'élément de référence et leurs mécanismes de détection sont susceptibles d'être soumis à de fortes puissances électriques auxquelles ils se doivent d'être particulièrement résistants. Cependant, les capteurs de tels mécanismes de détection, bien qu'adaptés à de telles puissances électriques, ont comme inconvénient de comporter une hystérésis à l'origine d'incertitudes dans la détermination d'une position.

La présente invention a pour but de pallier ces inconvénients en proposant un dispositif de détection de la position d'un élément mobile par rapport à un élément fixe pris comme référence qui puisse compenser, voire supprimer une hystérésis susceptible d'exister parmi les composants du dispositif tout en étant apte à être mise en oeuvre dans le cadre d'une gestion de signaux électriques à forte puissance.

L'invention a ainsi pour objet un dispositif de détection de position d'un élément mobile par rapport à un élément de référence, caractérisé en ce que le dispositif comprend :
- une structure fixe destinée à être montée fixe avec un élément de référence,
- une structure mobile destinée à être associée avec un mécanisme de déplacement de l'élément mobile par rapport à l'élément de référence, la structure mobile étant monté fixe en rotation avec un arbre de pivotement,
- un moyen d'actionnement de la structure mobile par rapport à la structure fixe,
- au moins un capteur,
- au moins une came comprenant une surface destinée à interagir avec au moins un capteur, la came étant montée fixe en rotation avec un arbre de pivotement,
- au moins un mécanisme de démultiplication de l'angle de pivotement de la came par rapport à l'angle de pivotement de l'arbre de pivotement de la structure mobile.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

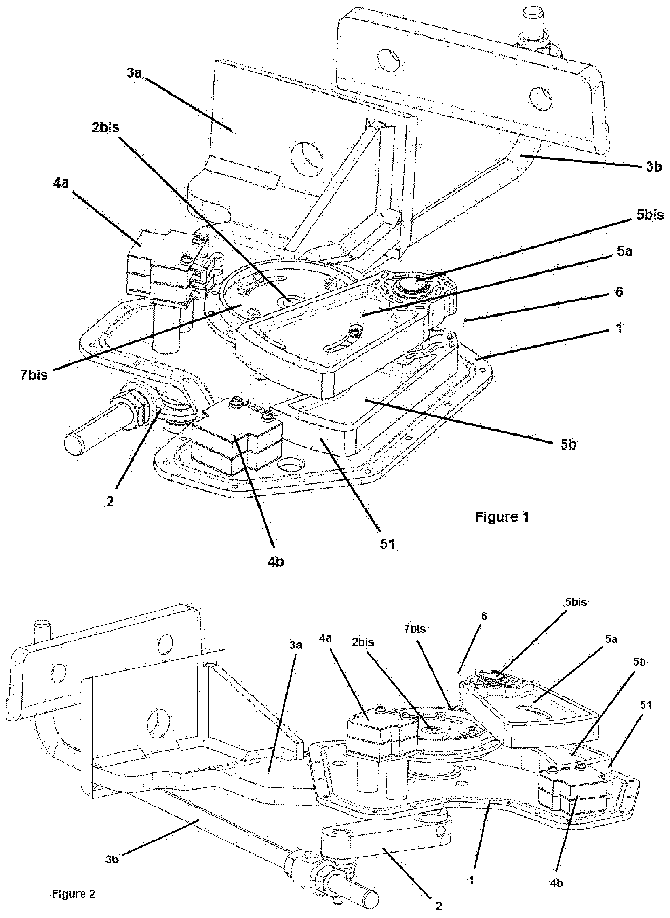

- la figure 1 est une représentation schématique d'un premier exemple de réalisation d'un dispositif de détection selon l'invention selon un premier angle de vue,
- la figure 2 est une représentation schématique d'un premier exemple de réalisation d'un dispositif de détection selon l'invention selon un second angle de vue,

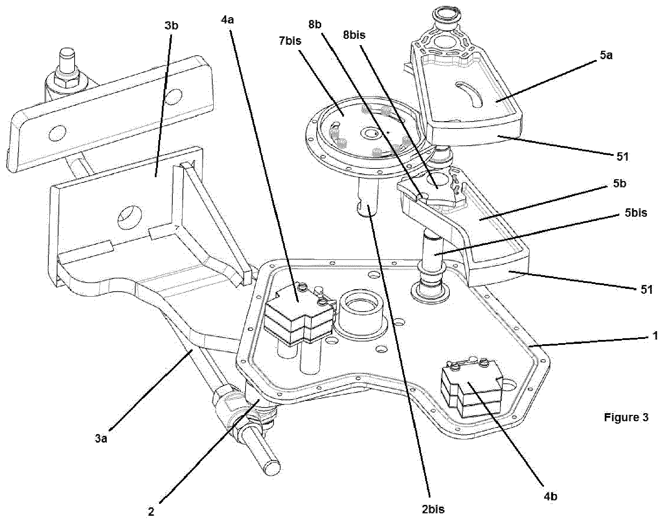

- la figure 3 est une représentation schématique éclatée d'un premier exemple de réalisation d'un dispositif de détection selon l'invention selon un angle de vue supérieure,

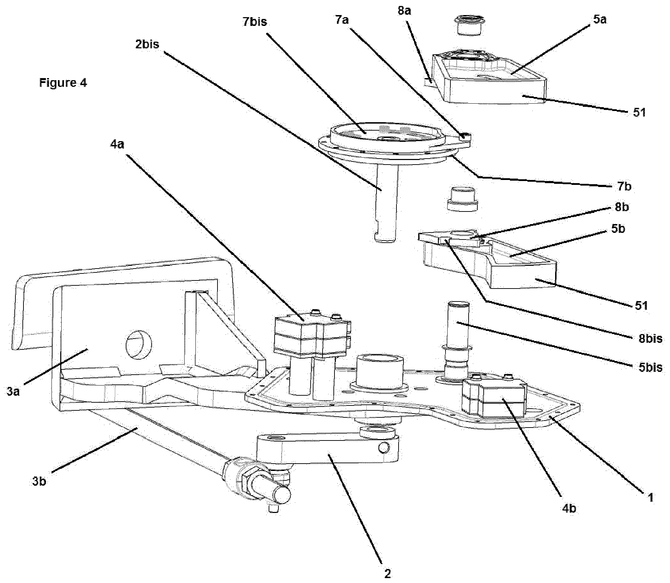

- la figure 4 est une représentation schématique éclatée d'un premier exemple de réalisation d'un dispositif de détection selon l'invention selon un angle de vue latérale,

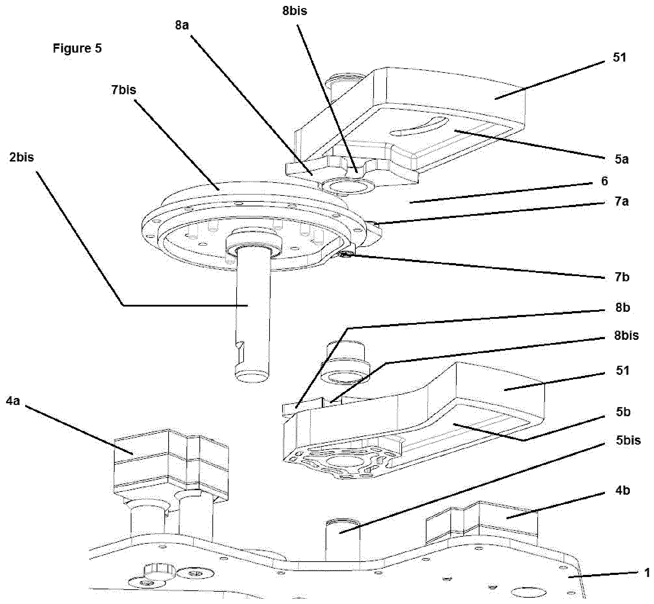

- la figure 5 est une représentation schématique éclatée d'un premier exemple de réalisation d'un dispositif de détection selon l'invention selon un angle de vue inférieure,

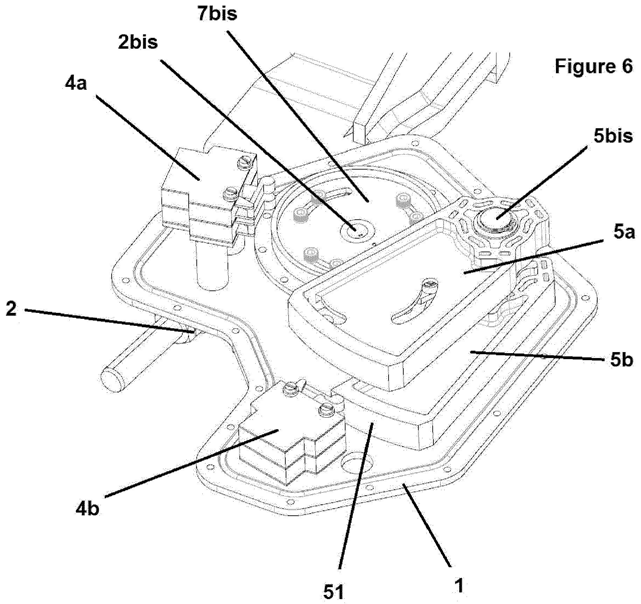

- la figure 6 est une représentation schématique d'un premier exemple de réalisation d'un dispositif de détection selon l'invention selon une vue supérieure,

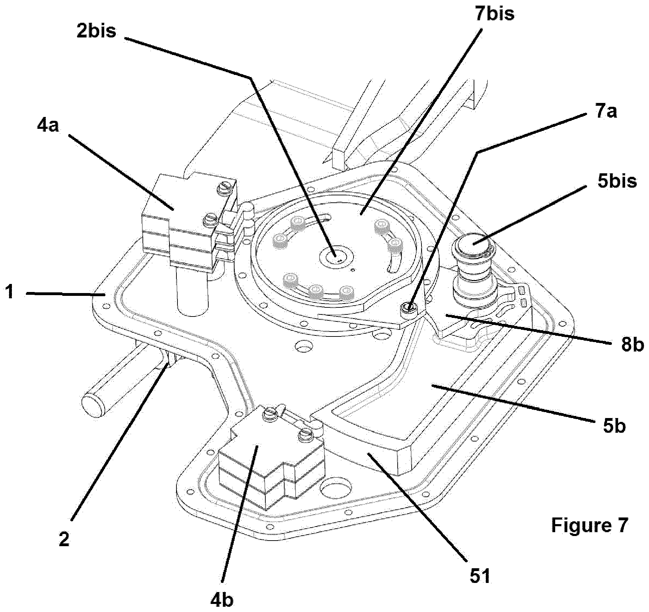

- la figure 7 est une représentation schématique de l'exemple de réalisation selon la figure 6 dans laquelle une came est retirée pour rendre visible une partie du mécanisme de l'invention,

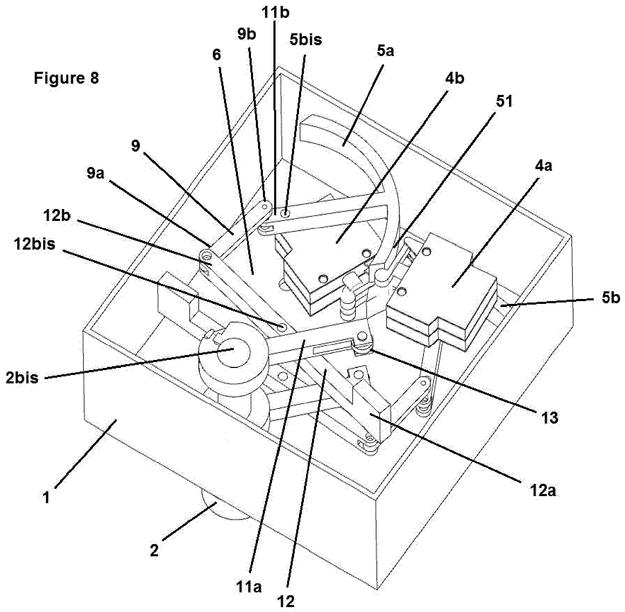

- la figure 8 une représentation schématique d'un second exemple de réalisation d'un dispositif de détection selon l'invention,

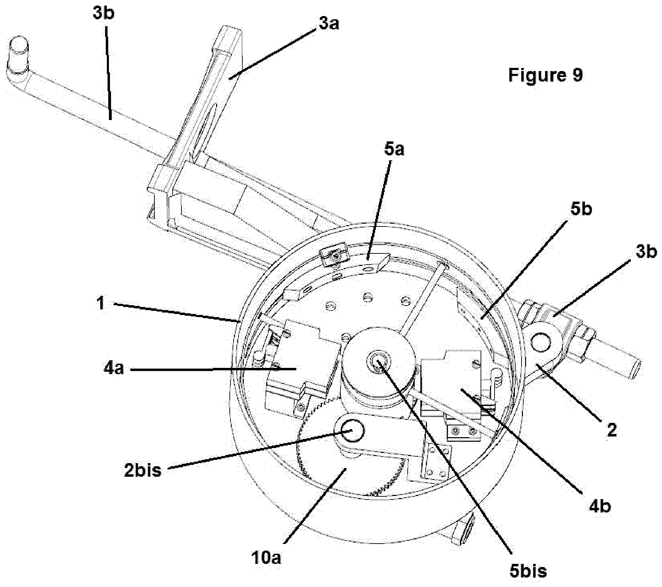

- la figure 9 une représentation schématique d'un troisième exemple de réalisation d'un dispositif de détection selon l'invention,

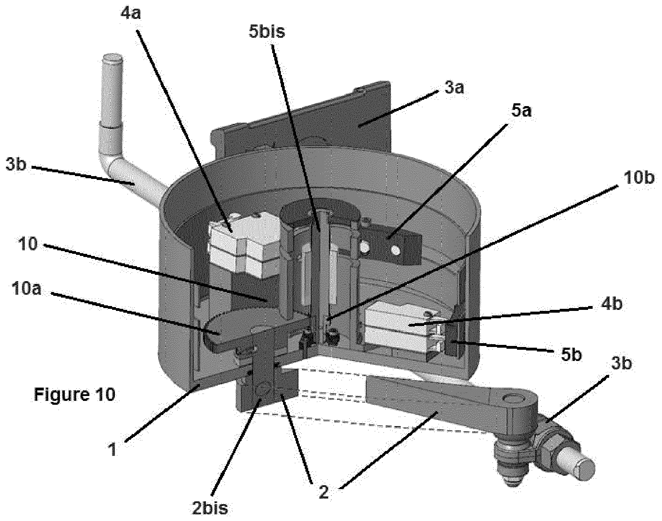

- la figure 10 une représentation schématique en section du troisième exemple de réalisation d'un dispositif de détection selon l'invention.

L'invention concerne ainsi un dispositif de détection de position d'un élément mobile 3b par rapport à un élément de référence 3a, caractérisé en ce que le dispositif comprend :
- une structure fixe 1 destinée à être montée fixe avec un élément de référence 3a,
- une structure mobile 2 destinée à être associée avec un mécanisme de déplacement de l'élément mobile 3b par rapport à l'élément de référence 3a, la structure mobile 2 étant monté fixe en rotation avec un arbre de pivotement 2bis,
- un moyen d'actionnement de la structure mobile 2 par rapport à la structure fixe 1,
- au moins un capteur 4,
- au moins une came 5a, 5b comprenant une surface 51 destinée à interagir avec au moins un capteur 4a, 4b, la came 5a, 5b étant montée fixe en rotation avec un arbre de pivotement 5bis,
- au moins un mécanisme de démultiplication 6 de l'angle de pivotement de la came 5a, 5b par rapport à l'angle de pivotement de l'arbre de pivotement 2bis de la structure mobile 2.

Ce dispositif de détection de position de l'invention, grâce au mécanisme de démultiplication 6 qu'il intègre, permet d'optimiser la position angulaire de la came 5a, 5b par rapport au déplacement axial de l'arbre de pivotement 2bis de la structure mobile 2 lorsque la came 5a, 5b interagit avec le capteur 4a, 4b. Grâce au mécanisme de démultiplication 6 du dispositif, la course angulaire nécessaire de la structure mobile 2 en pivotement par rapport au capteur 4a, 4b se trouve réduite pendant la durée de l'hystérésis du capteur 4a, 4b. Aussi, lors de l'interaction de la came 5a, 5b en pivotement avec un capteur 4a, 4b doté d'une hystérésis, plus le rapport du mécanisme de démultiplication 6 est élevé, plus la course de la structure mobile 2 en pivotement s'en trouve restreinte. De même, grâce au mécanisme de démultiplication 6, l'interaction de la came 5a, 5b avec un capteur 4a, 4b est susceptible d'être opérée lors d'une course angulaire beaucoup plus restreinte de la structure mobile 2 en comparaison avec un dispositif dépourvu de mécanisme de démultiplication 6. Le mécanisme de démultiplication 6 permet ainsi de restreindre l'interaction entre la came 5a, 5b et le capteur 4a, 4b à un intervalle angulaire optimal de la course de pivotement de la structure mobile 2.

Selon un exemple de mise en oeuvre, le dispositif de détection de l'invention est appliqué au domaine ferroviaire et des appareils de voies. Aussi, l'élément mobile 3b est susceptible de correspondre à une aiguille de rail déplaçable tandis que l'élément de référence 3a correspond au contre-aiguille correspondant.

Il convient de relever que, dans le cadre de la présente invention, l'interaction de la came 5a, 5b avec le capteur 4a, 4b est susceptible d'être opérée par contact, direct ou indirect, ou par modification d'un champ électromagnétique ou encore par modification d'un signal lumineux ou optique. Aussi, le capteur 4a, 4b est susceptible de prendre la forme d'un interrupteur électromécanique, d'un capteur capacitif, d'un capteur inductif, d'un capteur résistif ou même d'un capteur optique.

Selon une particularité de construction, l'arbre de pivotement 5bis de la came 5a, 5b et l'arbre de pivotement 2bis de la structure mobile 2 sont arrangés parallèlement entre eux. Un tel arrangement de ces deux arbres de pivotement 2bis, 5bis facilite l'intégration et le positionnement d'un mécanisme de démultiplication 6 entre la structure mobile 2 et la came 5a, 5b configurée pour interagir avec un capteur 4a, 4b.

Selon une autre particularité de construction compatible avec la particularité précédente, l'amplitude de pivotement de la structure mobile 2 est inférieure à 180°. Il convient de relever que, dans le cadre du dispositif de détection de l'invention, une amplitude de pivotement de la structure mobile 2 de faible importance est amplifiée par le mécanisme de démultiplication 6 pour générer un pivotement de la came 5a, 5b selon une course de pivotement amplifiée par rapport à celle de la structure mobile 2.

Selon une autre particularité de construction compatible avec la particularité précédente, le dispositif comprend deux capteurs configurés, d'une part, pour interagir avec au moins une came et, d'autre part, pour être enclenchés alternativement l'un par rapport à l'autre. Selon cette particularité, la came est montée pivotante entre deux positions angulaires extrêmes. Ces positions angulaires extrêmes de la came correspondent aux positions angulaires extrêmes de son arbre de pivotement 5bis déplacé par l'intermédiaire du mécanisme de démultiplication 6 et de l'arbre de pivotement 2bis de la structure mobile 2 lorsque l'élément mobile 3b est, d'une part, écarté et, d'autre part, rapproché, voire en appui, par rapport à l'élément de référence 3a.

Ainsi, conjointement au déplacement de l'élément mobile 3b, l'arbre de pivotement 5bis de la came est entraîné en rotation sous l'action du mécanisme de démultiplication 6 depuis une première position dans laquelle la came interagit avec un premier capteur vers une seconde position dans laquelle la came interagit avec un second capteur. Il convient de relever que lorsque la came se trouve dans la seconde position et interagit avec le second capteur, cette came cesse toute interaction avec le premier capteur. Selon un arrangement préféré, lorsque l'élément mobile 3b est en déplacement dans une position intermédiaire entre les positions extrêmes, écarté et rapproché, la came est également en pivotement dans une position intermédiaire dans laquelle elle n'interagit ni avec le premier capteur, ni avec le second capteur. Selon un exemple de construction non-limitatif de cette particularité, la surface de la came qui interagit avec le premier capteur et la même surface de came qui interagit avec le second capteur. Selon un exemple de construction alternative de cette particularité, la came comprend deux surfaces différentes respectivement dédiées au premier capteur 4a et au second capteur 4b.

Selon une autre particularité de construction différente de la particularité précédente, le dispositif comprend deux capteurs 4a, 4b et deux cames 5a, 5b, chacun des capteurs 4a, 4b étant configuré pour interagir avec une came 5a, 5b respective, les deux cames 5a, 5b étant montées fixes en rotation sur un arbre de pivotement 5bis commun ou sur des arbres de pivotement 5bis respectifs. Selon cette particularité de construction, lorsqu'un arbre de pivotement 5bis porte les deux cames 5a, 5b associées en rotation, cet arbre de pivotement 5bis est monté pivotant entre deux positions angulaires extrêmes qui correspondent aux positions angulaires extrêmes de l'arbre de pivotement 5bis déplacé par l'intermédiaire du mécanisme de démultiplication 6 et de l'arbre de pivotement 2bis de la structure mobile 2 lorsque l'élément mobile 3b est, d'une part, écarté et, d'autre part, rapproché, voire en appui, par rapport à l'élément de référence 3a. De façon similaire, lorsque chacune des cames 5a, 5b est portée par un arbre de pivotement propre, chacun de ces arbres de pivotement est monté pivotant entre deux positions angulaires extrêmes parmi lesquelles une de ces positions extrêmes correspond à la position de la came 5a, 5b portée qui interagit avec son capteur 4a, 4b dédié, cette position correspondant conjointement par l'intermédiaire du mécanisme de démultiplication 6 à un positionnement de l'arbre de pivotement 2bis de la structure mobile 2 lorsque l'élément mobile 3b est soit écarté ou soit rapproché, voire en appui, par rapport à l'élément de référence 3a.

Conjointement au déplacement de l'élément mobile 3b, les deux cames 5a, 5b sont entraînées en pivotement sous l'action du mécanisme de démultiplication 6 depuis une première position, dans laquelle une première came 5a interagit avec un premier capteur 4a, vers une seconde position, dans laquelle une seconde came 5b interagit avec un second capteur 4b. Lorsque les deux cames 5a, 5b sont dans la première position, seule la première came 5a interagit avec un capteur 4a. De même, lorsque les deux cames 5a, 5b sont dans la seconde position, seule la seconde came 5b interagit avec un capteur 4b. Par ailleurs, de façon préférée, lorsque l'élément mobile 3b est en déplacement dans une position intermédiaire entre les positions extrêmes, écarté et rapproché, les deux cames 5a, 5b pivotent également dans une position intermédiaire dans laquelle aucune d'entre elles n'est en mesure d'interagir ni avec le premier capteur 4a, ni avec le second capteur 4b.

Selon différentes particularités de construction, le mécanisme de démultiplication 6 est arrangé pour permettre un entraînement simultané en pivotement des deux cames 5a, 5b, ou bien un entraînement décalé des deux cames 5a, 5b en pivotement ou encore un entraînement séparé de ces deux cames 5a, 5b.

Selon une première spécificité de construction, le mécanisme de démultiplication 6 du dispositif de détection de l'invention comprend au moins :
- un téton 7a, 7b monté fixe en rotation avec un premier élément parmi, d'une part, l'arbre de pivotement 2bis de la structure mobile 2 et, d'autre part, l'arbre de pivotement 5bis d'au moins une came 5a, 5b,
- une croix de malte 8a, 8b montée fixe en rotation avec le second élément parmi, d'une part, l'arbre de pivotement 2bis de la structure mobile 2 et, d'autre part, l'arbre de pivotement 5bis d'au moins une came 5a, 5b, la croix de malte 8a, 8b comprenant au moins une rainure 8bis configurée pour coopérer avec le téton 7a, 7b, la rainure 8bis étant orientée selon un axe qui comprend une intersection perpendiculaire avec l'arbre de pivotement de la croix de malte 8a, 8b.

Bien que, sur les différentes figures du présent document, le téton 7a, 7b soit associé en rotation avec l'arbre de pivotement 2bis de la structure mobile 2 et que la croix de malte 8a, 8b soit associée en rotation avec l'arbre de pivotement 5bis des deux cames 5a, 5b, il convient de noter qu'un arrangement alternatif est susceptible d'être envisagé dans lequel le téton 7a, 7b est associé en rotation aux cames 5a, 5b et la croix de malte 8a, 8b est associée en rotation avec la structure mobile 2. Dans chacune de ces différentes configurations, le téton 7a, 7b coopère avec la rainure 8bis de la croix de malte 8a, 8b de sorte que le déplacement en rotation d'un premier de ces deux éléments entraîne le déplacement en rotation du second élément par coulissement du téton 7a, 7b dans la rainure 8bis. Ainsi, par exemple, le déplacement angulaire du téton 7a, 7b entraîne un déplacement angulaire de la croix de malte 8a, 8b conjointement au coulissement du téton 7 dans la rainure 8bis de la croix de malte 8a, 8b.

Selon cette première spécificité, la distance entre le téton 7a, 7b et son axe de rotation est différente, sur au moins une portion de sa course, de la distance qui sépare le téton 7a, 7b de l'axe de rotation de la rainure 8bis de la croix de malte 8a, 8b. C'est-à-dire que la distance entre le téton 7a, 7b et l'arbre de pivotement 2bis de la structure mobile 2 est différente, sur au moins une portion de sa course, de la distance qui sépare le téton 7a, 7b de l'arbre de pivotement 5bis de la paire de cames 5a, 5b. Ce positionnement du téton 7a, 7b, opéré de sorte qu'il soit à des distances différentes des arbres de pivotement 2bis, 5bis des deux pièces du mécanisme permet de transmettre un déplacement angulaire tout en y appliquant une démultiplication. Lorsque le rapport entre, d'une part, la distance qui sépare le téton 7a, 7b de l'arbre de pivotement 2bis de la structure mobile 2 et, d'autre part, la distance qui sépare le téton 7a, 7b de l'arbre de pivotement de la paire de cames 5a, 5b a une valeur supérieure à 1, le déplacement angulaire de la structure mobile 2 génère un déplacement angulaire des cames 5a, 5b avec une amplitude de course plus importante.

Il convient de relever que, selon un arrangement préféré propre à cette première spécificité de construction, la croix de malte 8a, 8b correspond à une pièce mécanique montée pivotante autour d'un arbre et comprenant une rainure 8bis unique pour coopérer avec le téton 7a, 7b du mécanisme. Selon cet arrangement, la transmission du déplacement angulaire entre l'arbre de pivotement 2bis de la structure mobile 2 et l'arbre de pivotement 5bis des cames 5a, 5b grâce à l'interaction entre le téton 7 et la rainure 8bis se traduit par un mouvement pendulaire dont l'amplitude maximale de rotation de l'arbre de pivotement 5bis de la paire de cames 5a, 5b est inférieure à 180°. Selon une spécificité non-restrictive de cette construction préférée, la rainure 8bis comporte une longueur limitée de façon à présenter la forme d'un simple logement ouvert, par exemple avec une forme évasée, au niveau duquel le téton 7a, 7b du mécanisme se positionne lors de sa coopération avec la croix de malte 8a, 8b. Selon une autre spécificité non-restrictive de cette construction préférée, la rainure 8bis comporte une extrémité ouverte au niveau de laquelle le téton 7a, 7b est susceptible de s'insérer puis de ressortir lors de son fonctionnement. Ainsi, en absence de coopération du téton 7a, 7b avec la rainure 8bis de la croix de malte 8a, 8b, c'est à dire lorsque le téton 7a, 7b n'est pas encore inséré dans la rainure 8bis ou lorsque le téton 7a, 7b est sorti de la rainure 8bis, l'arbre de pivotement associé avec le téton 7a, 7b et l'arbre de pivotement associé avec la croix de malte 8a, 8b sont indépendants en rotation. Cette spécificité permet ainsi, par exemple, à l'arbre de pivotement 2bis de la structure mobile 2, au cours d'un intervalle angulaire déterminé qui précède et/ou succède la coopération du téton 7a, 7b avec la rainure 8bis de la croix de malte 8a, 8b, de pivoter sans qu'une des cames 5a, 5b ou même les deux ne soient entrainées en pivotement.

Selon une particularité non-limitative appliquée à cette première spécificité de construction, les plans de pivotement respectifs, d'une part, des éléments du mécanisme de démultiplication 6 comprenant au moins un téton 7a, 7b et une croix de malte 8a, 8b et, d'autre part, au moins une came 5a, 5b sont superposés. Cette particularité correspond à un arrangement du dispositif de l'invention qui optimise l'agencement des différents éléments dans un volume restreint afin de limiter l'encombrement du dispositif par rapport à des dispositifs de détection déjà connus. La croix de malte 8a, 8b et au moins une came 5a, 5b présentent des structures respectives sensiblement planes et disposées dans un plan perpendiculaire à leur arbre de pivotement 2bis, 5bis associé. De même, le téton 7a, 7b est monté sur une structure 7bis qui présente une section de surface plane assurant la jonction entre le téton 7a, 7b et l'arbre de pivotement associé. Selon un exemple de construction, cette structure 7bis qui porte le téton 7a, 7b présente la forme d'un plateau monté sur un arbre de pivotement. Lorsque le mécanisme 6 comprend plusieurs tétons 7a, 7b, ces tétons 7a, 7b sont susceptibles d'être portés par des structures respectives ou alternativement par une structure 7bis commune.

Les arbres de pivotement respectifs 2bis, 5bis de la structure mobile 2 et des cames 5a, 5b étant disposés de façon parallèle entre eux, les arbres de pivotement du téton 7a, 7b et de la croix de malte 8a, 8b sont également parallèles entre eux de sorte que le dispositif comprend :
- un premier niveau où le mécanisme de démultiplication 6 se trouve positionné. Ce premier niveau comprend la coopération d'au moins un téton 7a, 7b avec la rainure 8bis d'une croix de malte 8a, 8b pour transmettre un déplacement angulaire entre, d'une part, l'arbre de pivotement 2bis de la structure mobile 2 et, d'autre part, l'arbre de pivotement 5bis d'au moins une came 5a, 5b.
- un second niveau où au moins une came 5a, 5b se trouve positionnée pour interagir avec au moins un capteur 4a, 4b.

Il convient de relever que la superposition des plans de déplacement d'au moins une came 5a, 5b et des éléments du mécanisme de démultiplication 6 est susceptible d'être réalisée en positionnant au moins une came 5a, 5b soit en dessous du mécanisme de démultiplication 6 ou soit au-dessus de ce mécanisme 6.

Selon une autre particularité non-limitative complémentaire de cette première spécificité de construction, l'amplitude de pivotement d'au moins une came 5a, 5b est opérée dans une section de plan qui comprend un point d'intersection avec la direction de l'axe de pivotement de l'arbre de pivotement 2bis de la structure mobile 2. Le positionnement du mécanisme de démultiplication 6 entre, d'une part, l'arbre de pivotement 2bis de la structure mobile 2 et, d'autre part, le plan de déplacement d'au moins une came 5a, 5b permet le positionnement de la came 5a, 5b dans un plan qui n'est pas traversé par l'arbre de pivotement 2bis de la structure mobile 2, pièce indispensable pour transmettre la rotation de la structure mobile 2 au mécanisme de démultiplication 6. Cet arrangement évite, d'une part, un encombrement lié à la présence de l'arbre de pivotement 2bis qui rassemble en rotation la structure mobile 2 et le mécanisme de démultiplication 6 et, d'autre part, une limitation de l'amplitude de déplacement angulaire de la came 5a, 5b. Aussi, le positionnement de la came 5a, 5b dans un plan où l'arbre de pivotement 2bis de la structure mobile 2 est absent, autorise un déplacement angulaire de la came 5a, 5b dans une section de plan qui comporte une intersection avec la direction de l'axe de pivotement de l'arbre de pivotement 2bis de la structure mobile 2.

Selon une autre particularité non-limitative appliquée à cette première spécificité de construction, le mécanisme de démultiplication 6 comprend une paire de tétons 7a, 7b destinés à interagir avec la rainure 8bis d'une croix de malte 8a, 8b respective associée au déplacement d'une came 5a, 5b spécifique. Selon cette particularité, deux cames 5a, 5b sont montés sur des arbres de pivotement respectifs, parallèles et éventuellement coaxiaux. Chacune de ces cames 5a, 5b est entraînées en pivotement sous l'action d'un mécanisme indépendant qui fait intervenir la coopération d'un téton 7a, 7b et d'une croix de malte 8a, 8b spécifique. Selon cette particularité, une paire d'une premier élément parmi, d'une part, la paire de tétons 7a, 7b et, d'autre part, la paire de croix de malte 8a, 8b est montée fixe rotation avec l'arbre de pivotement 2bis de la structure mobile 2, tandis que chacun des éléments de la seconde paire parmi, d'une part, la paire de tétons 7a, 7b et, d'autre part, la paire de croix de malte 8a, 8b est monté fixe en rotation avec les arbres de pivotement de chacune des cames 5a, 5b.

Selon une spécificité non-limitative de cette particularité, les tétons 7a, 7b sont positionnés à des distances identiques par rapport à leur axe de pivotement. Selon une spécificité alternative, les tétons 7a, 7b sont positionnés à des distances différentes par rapport à leur axe de pivotement. Cette différence de distance permet d'obtenir des démultiplications différentes pour chacun des tétons 7a, 7b en coopération avec une croix de malte 8a, 8b respective, et conjointement des démultiplications de déplacement angulaire différentes entre l'arbre de pivotement 2bis de la structure mobile 2 et chacune des cames 5a, 5b.

Selon une autre spécificité complémentaire de cette particularité, les deux tétons 7a, 7b sont positionnés dans le même plan que leur axe de pivotement commun, de sorte que leurs coopérations respectives avec leurs croix de malte 8a, 8b dédiées sont simultanées. Selon une alternative à cette spécificité, les deux tétons 7a, 7b ne sont pas positionnés dans un plan commun avec leur axe de pivotement, de sorte que leurs coopérations respectives avec leurs croix de malte 8a, 8b dédiées sont décalées. Par ailleurs, selon une caractéristique supplémentaire et complémentaire de cette spécificité, lorsque le dispositif comprend plusieurs tétons 7a, 7b, le dispositif comprend une interface de réglage de la position angulaire d'au moins un premier téton 7a, 7b par rapport à au moins un second téton sur l'arbre de pivotement sur lequel sont montés les tétons 7a, 7b. Selon un exemple de construction, cette interface de réglage est réglage par des vis de serrage montées fixes sur l'arbre de pivotement et qui coopère avec des rainures concentriques avec l'axe de pivotement du plateau 7bis qui porte un téton 7a, 7b. Cette interface de réglage autorise ainsi un ajustement de la position angulaire du téton 7a, 7b par rapport à celle d'un second téton porté par un second plateau monté également sur l'arbre de pivotement.

Selon une seconde spécificité de construction, le mécanisme de démultiplication 6 du dispositif de détection de l'invention comprend au moins :
- un premier bras 11a monté fixe en rotation sur l'arbre de pivotement 2bis de la structure mobile 2,
- un second bras 11b monté fixe en rotation sur l'arbre de pivotement 5bis d'au moins une came 5a, 5b,
- une bielle 9 qui comprend, d'une part, une première extrémité 9a qui s'articule, directement ou indirectement, avec une interface dédiée 12 du dispositif configurée pour permettre un déplacement de la bielle 9 sous l'effet du premier bras 11a positionné à distance de l'arbre de pivotement 2bis de la structure mobile 2 et, d'autre part, une seconde extrémité 9b qui s'articule avec un point du second bras 11b positionné à distance de l'arbre de pivotement 5bis de la came 5a, 5b.

Selon une première variante de construction de cette seconde spécificité qui n'est pas illustrée dans le présent document, l'interface dédiée est réalisée par une articulation entre la première extrémité 9a de la bielle 9 et une partie du premier bras 11a positionnée à distance de l'arbre de pivotement 2bis de la structure mobile 2. Selon cette variante de construction, la démultiplication générée par le mécanisme 6 est réalisée par la position des points d'articulation de chacune des extrémités 9a, 9b avec un bras respectif positionné sur les arbres de pivotement 2bis, 5bis. La distance entre, d'une part, l'interface dédiée 11c réalisée par l'articulation de la première extrémité 9a de la bielle 9 avec une partie du premier bras 11a et, d'autre part, l'axe de pivotement de l'arbre 2bis qui porte le premier bras 11a est différente de la distance entre, d'une part, le point d'articulation de la seconde extrémité 9b de la bielle 9 avec le second bras 11b et, d'autre part, l'axe de pivotement de l'arbre 5bis qui porte le second bras 11b. Lorsque le rapport entre, d'une part, la distance qui sépare le point d'articulation de la bielle 9 avec le premier bras 11a de l'axe de pivotement de l'arbre 2bis qui porte ce premier bras 11a et, d'autre part, la distance entre le point d'articulation de la bielle 9 avec le second bras 11b et l'axe de pivotement de l'arbre 5bis qui porte ce second bras 11b a une valeur supérieure à 1, le déplacement angulaire de la structure mobile 2 génère un déplacement angulaire de la came 5 avec une amplitude de course plus importante.

Selon une seconde variante de construction de cette seconde spécificité, l'interface dédiée 12 est réalisée par un bras de levier monté sur un arbre de pivotement 12bis et qui comprend, d'une part, une première extrémité 12a qui interagit avec une partie du premier bras 11a positionnée à distance de l'arbre de pivotement 2bis de la structure mobile 2 et, d'autre part, une seconde extrémité 12b qui s'articule avec la première extrémité 9a de la bielle 9. Ainsi, le bras de levier 12 comporte deux extrémités 12a, 12b disposées de part et d'autre de l'axe de pivotement 12bis de l'arbre 11. La seconde extrémité 12b du bras de levier 12 coopère au niveau d'une articulation avec la première extrémité 9a de la bielle 9. L'interaction de la première extrémité 12a du bras de levier 12 avec le premier bras 11a prend la forme d'une surface de l'extrémité 12a du bras de levier 12 contre laquelle une partie du premier bras 11a prend appui sous l'action de la rotation de l'arbre de pivotement 2bis de la structure mobile 2. Selon un exemple de construction de cette interaction, la surface de l'extrémité 12a du bras de levier 12 forme une surface de roulement contre laquelle roule un galet 12 porté par la partie en appui du premier bras 11a du mécanisme. La rotation de l'arbre de pivotement 2bis de la structure mobile 2 entraine le premier bras 11a en appui contre la première extrémité 12a du bras de levier 12. Cet appui génère une bascule du bras de levier 12 au niveau de sa seconde extrémité 12b par rapport à son axe de pivotement 12bis. Le déplacement de la seconde extrémité 12b du bras de levier 12 entraine un déplacement de la bielle 9 qui actionne le second bras 11b et fait pivoter la came 5a, 5b correspondante au niveau de son arbre de pivotement 5bis. Selon un arrangement préféré de cet exemple de construction, le bras de levier 12 est associé à un moyen de retour en position, comme par exemple un ressort qui s'oppose au pivotement du bras de levier 12 sous l'action du premier bras 11a, de sorte qu'en absence d'actionnement du mécanisme démultiplication 6 par le premier bras 11a, l'ensemble des éléments du mécanisme 6 reviennent en position.

Selon une particularité de ces variantes de cette seconde spécificité, le second bras 11b fixe en rotation sur l'arbre de pivotement 5bis d'au moins une came 5a, 5b est intégré au corps de la came 5a, 5b, de sorte que la seconde extrémité 9b de la bielle 9 s'articule directement sur un point de la structure de la came 5a, 5b positionné à distance de l'axe de pivotement de son arbre 5bis.

Selon une autre particularité appliquée à ces variantes de cette seconde spécificité, lorsque le dispositif comprend plusieurs cames 5a, 5b, chacune des cames 5a, 5b est associé à un ensemble respectif formé notamment par un premier bras 11a, un second bras 11b, une bielle 9 et une interface dédiée 12, les premiers bras 11a de ces ensembles étant susceptible d'être monté sur un arbre de pivotement 2bis commun.

Selon une autre particularité appliquée à ces variantes de cette seconde spécificité, les plans de déplacement respectifs, d'une part, des éléments du mécanisme de démultiplication 6 que sont les bras montés fixes en rotation sur les arbres de pivotement 2bis, 5bis de la structure mobile 2 et d'au moins une came 5a, 5b et, d'autre part, de au moins une came 5a, 5b sont superposés. Aussi, le dispositif comprend :
- un premier niveau où le mécanisme de démultiplication 6 se trouve positionné. Ce premier niveau comprend le premier bras 11a monté fixe en rotation sur l'arbre de pivotement 2bis de la structure mobile 2, le second bras 11b monté fixe en rotation sur l'arbre de pivotement 5bis de la came 5a, 5b et la bielle 9 qui réalise une jonction, directe ou indirecte, avec chacun de ces deux bras 11a, 11b,
- un second niveau où au moins une came 5a, 5b se trouve positionnée pour interagir avec au moins un capteur 4a, 4b.

Selon une caractéristique non-limitative de cette autre particularité de construction, lorsque le second bras 11b est intégré à la structure de la came 5a, 5b, seuls le premier bras 11a et la bielle 9 du mécanisme de démultiplication 6 sont positionnés au premier niveau. Par ailleurs, la superposition des plans de déplacement de la came 5a, 5b et des éléments du mécanisme de démultiplication 6 est susceptible d'être réalisée en positionnant la came 5a, 5b soit en dessous du mécanisme de démultiplication 6 ou soit au-dessus de ce mécanisme 6.

Selon une autre particularité non-limitative complémentaire de ces variantes de cette seconde spécificité de construction, l'amplitude de pivotement d'au moins une came 5a, 5b est opérée dans une section de plan qui comprend un point d'intersection avec la direction de l'axe de pivotement de l'arbre de pivotement 2bis de la structure mobile 2. Le positionnement du mécanisme de démultiplication 6 entre, d'une part, l'arbre de pivotement 2bis de la structure mobile 2 et, d'autre part, le plan de déplacement d'au moins une came 5a, 5b permet le positionnement de la came 5a, 5b dans un plan qui n'est pas traversé par l'arbre de pivotement 2bis de la structure mobile 2, pièce indispensable pour transmettre la rotation de la structure mobile 2 au mécanisme de démultiplication 6. Cet arrangement évite, d'une part, un encombrement lié à la présence de l'arbre de pivotement 2bis qui rassemble en rotation la structure mobile 2 et le mécanisme de démultiplication 6 et, d'autre part, une limitation de l'amplitude de déplacement angulaire de la came 5a, 5b. Aussi, le positionnement de la came 5a, 5b dans une section de plan qui n'est pas traversé par l'arbre de pivotement 2bis de la structure mobile 2, autorise un déplacement angulaire de la came 5a, 5b dans une section de plan qui comporte une intersection avec la direction de l'axe de pivotement de l'arbre de pivotement 2bis de la structure mobile 2.

Selon une troisième spécificité de construction, le mécanisme de démultiplication 6 du dispositif de détection de l'invention comprend un mécanisme d'engrenage 10 comprenant au moins une première roue dentée 10a fixe en rotation avec l'arbre de pivotement 2bis de la structure mobile 2 et une seconde roue dentée 10b fixe en rotation avec l'arbre de pivotement 5bis de la came 5a, 5b. L'interaction entre la première roue 10a et la seconde roue 10b fait intervenir un train d'engrenage qui, par le jeu des dimensions des différentes pièces, notamment pignons et crémaillères, qui le composent, permet une démultiplication du déplacement angulaire de l'arbre de pivotement 5bis de la came 5 par rapport à l'arbre de pivotement 2bis de la structure mobile 2.

Selon une particularité appliquée à cette troisième spécificité, les plans de déplacement respectifs, d'une part, des éléments du mécanisme de démultiplication 6 que sont notamment les pignons et crémaillères en rotation et, d'autre part, de au moins une came 5a, 5b sont superposés. Aussi, le dispositif comprend :
- un premier niveau où le mécanisme de démultiplication 6 se trouve positionné. Ce premier niveau comprend le mécanisme d'engrenage 10 qui réalise un train d'engrenage entre au moins la première roue dentée 10a fixe en rotation avec l'arbre de pivotement 2bis de la structure mobile 2 et la seconde roue dentée 10b fixe en rotation avec l'arbre de pivotement 5bis de la came 5a, 5b.
- un second niveau où au moins une came 5a, 5b se trouve positionnée pour interagir avec au moins un capteur 4a, 4b.

Il convient de relever que la superposition des plans de déplacement de la came 5a, 5b et des éléments du mécanisme de démultiplication 6 est susceptible d'être réalisée en positionnant la came 5a, 5b soit en dessous du mécanisme de démultiplication 6 ou soit au-dessus de ce mécanisme 6.

Selon une autre particularité complémentaire appliquée à cette troisième spécificité, la came 5a, 5b correspond à une came hélicoïdale cylindrique montée en rotation autour de l'arbre de pivotement 5bis, lui-même entraîné en rotation par le train d'engrenage du mécanisme de démultiplication 6.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de détection de position d'un élément mobile (3b) par rapport à un élément de référence (3a), **caractérisé en ce que** le dispositif comprend :
- une structure fixe (1) destinée à être montée fixe avec un élément de référence (3a),
- une structure mobile (2) destinée à être associée avec un mécanisme de déplacement de l'élément mobile (3b) par rapport à l'élément de référence (3a), la structure mobile (2) étant monté fixe en rotation avec un arbre de pivotement (2bis),
- un moyen d'actionnement de la structure mobile (2) par rapport à la structure fixe (1),
- au moins un capteur (4a, 4b),
- au moins une came (5a, 5b) comprenant une surface (51) destinée à interagir avec au moins un capteur (4a, 4b), la came (5a, 5b) étant montée fixe en rotation avec un arbre de pivotement (5bis),
- au moins un mécanisme de démultiplication (6) de l'angle de pivotement de la came (5a, 5b) par rapport à l'angle de pivotement de l'arbre de pivotement (2bis) de la structure mobile (2).

2. Dispositif de détection de position selon la revendication 1, **caractérisé en ce que** l'arbre de pivotement (5bis) de la came (5a, 5b) et l'arbre de pivotement (2bis) de la structure mobile (2) sont arrangés parallèlement entre eux.

3. Dispositif de détection de position selon une des revendications précédentes, **caractérisé en ce que** l'amplitude de pivotement de la structure mobile (2) est inférieure à 180°.

4. Dispositif de détection de position selon une des revendications précédentes, **caractérisé en ce que** le dispositif comprend deux capteurs (4a, 4b) configurés, d'une part, pour interagir avec au moins une came (5a, 5b) et, d'autre part, pour être enclenchés alternativement l'un par rapport à l'autre.

5. Dispositif de détection de position selon une des revendications précédentes, **caractérisé en ce que** le dispositif comprend deux capteurs (4a, 4b) et deux cames (5a, 5b), chacun des capteurs (4a, 4b) étant configuré pour interagir avec une came (5a, 5b) respective, les deux cames (5a, 5b) étant montées fixes en rotation sur un arbre de pivotement (5bis) commun ou sur des arbres de pivotement (5bis) respectifs.

6. Dispositif de détection de position selon une des revendications précédentes, **caractérisé en ce que** les plans de pivotement respectifs, d'une part, des éléments du mécanisme de démultiplication (6) et, d'autre part, d'au moins une came (5a, 5b) sont superposés

7. Dispositif de détection de position selon la revendication 6, **caractérisé en ce que** l'amplitude de pivotement d'au moins une came (5) est opérée dans une section de plan qui comprend un point d'intersection avec la direction de l'axe de pivotement de l'arbre de pivotement (2bis) de la structure mobile (2).

8. Dispositif de détection de position selon une des revendications 1 à 7, **caractérisé en ce que** le mécanisme de démultiplication (6) comprend au moins
- un téton (7a, 7b) monté fixe en rotation avec un premier élément parmi, d'une part, l'arbre de pivotement (2bis) de la structure mobile (2) et, d'autre part, l'arbre de pivotement (5bis) d'au moins une came (5a, 5b),
- une croix de malte (8a, 8b) montée fixe en rotation avec le second élément parmi, d'une part, l'arbre de pivotement (2bis) de la structure mobile (2) et, d'autre part, l'arbre de pivotement (5bis) d'au moins une came (5a, 5b), la croix de malte (8a, 8b) comprenant au moins une rainure (8bis) configurée pour coopérer avec le téton (7a, 7b), la rainure (8bis) étant orientée selon un axe qui comprend une intersection perpendiculaire avec l'axe de pivotement de la croix de malte (8a, 8b).

9. Dispositif de détection de position selon la revendication 8, **caractérisé en ce que**, lorsque le dispositif comprend plusieurs tétons (7a, 7b), le dispositif comprend une interface de réglage de la position angulaire d'au moins un premier téton (7a, 7b) par rapport à au moins un second téton sur l'arbre de pivotement sur lequel sont montés les tétons.

10. Dispositif de détection de position selon une des revendications 1 à 7, **caractérisé en ce que** le mécanisme de démultiplication (6) du dispositif de détection de l'invention comprend au moins :
- un premier bras (11a) monté fixe en rotation sur l'arbre de pivotement (2bis) de la structure mobile (2),
- un second bras (11b) monté fixe en rotation sur l'arbre de pivotement (5bis) d'au moins une came (5a, 5b),
- une bielle (9) qui comprend, d'une part, une première extrémité (9a) qui s'articule, directement ou indirectement, avec une interface dédiée (12) du dispositif configurée pour permettre un déplacement de la bielle (9) sous l'effet du premier bras (11a) positionné à distance de l'arbre de pivotement (2bis) de la structure mobile (2) et, d'autre part, une seconde extrémité (9b) qui s'articule avec un point du second bras (11b) positionné à distance de l'arbre de pivotement (5bis) de la came (5a, 5b).

11. Dispositif de détection de position selon la revendication 10, **caractérisé en ce que** l'interface dédiée est réalisée par une articulation entre la première extrémité (9a) de la bielle (9) et une partie du premier bras (11a) positionnée à distance de l'arbre de pivotement (2bis) de la structure mobile (2).

12. Dispositif de détection de position selon la revendication 10, **caractérisé en ce que** l'interface dédiée (12) est réalisée par un bras de levier monté sur un arbre de pivotement (12bis) et qui comprend, d'une part, une première extrémité (12a) qui interagit avec une partie du premier bras (11a) positionnée à distance de l'arbre de pivotement (2bis) de la structure mobile (2) et, d'autre part, une seconde extrémité (12b) qui s'articule avec la première extrémité (9a) de la bielle (9).

13. Dispositif de détection de position selon une des revendications 1 à 7, **caractérisé en ce que** le mécanisme de démultiplication (6) intègre un mécanisme d'engrenage (10) comprenant au moins une première roue dentée (10a) fixe en rotation avec l'arbre de pivotement (2bis) de la structure mobile (2) et une seconde roue dentée (10b) fixe en rotation avec l'arbre de pivotement (5bis) de la came (5a, 5b).

14. Dispositif de détection de position selon la revendication 13, **caractérisé en ce que** la came (5a, 5b) correspond à une came hélicoïdale cylindrique montée en rotation autour de l'arbre de pivotement (5bis), lui-même entraîné en rotation par le train d'engrenage du mécanisme de démultiplication (6).
